# EUROPEAN PATENT APPLICATION

(11) **EP 1 895 712 A2**
(43) Date of publication of application: **05.03.2008**
(21) Application number: 07106463.8
(22) Date of filing: 18.04.2007
(51) Int. Cl.: H04L 12/26

(54) **System for monitoring the state of apparatuses in a communication network**

(30) Priority: 31.08.2006 JP 2006236267
(71) Applicant: Fujitsu Ltd., Kawasaki-shi, Kanagawa 211-8588 (JP)
(72) Inventor: Kamada, Tetsushi, Kawasaki-shi Kanagawa 211-8588 (JP); Terasaki, Yasunori, Kawasaki-shi Kanagawa 211-8588 (JP)
(74) Representative: Hitching, Peter Matthew

(57) **Abstract**

A system for monitoring life-and-death states of a plurality information processing apparatuses (100, 200, 300) connected by a communication network (NW), has life-and-death monitoring databases (130, 230) managing the life-and-death states of the information processing apparatuses (100, 200, 300) for each particular group of groups to which the plurality of information processing apparatuses to be monitored are grouped; and a part of transferring in sequence, among the groups, by means of information transmission among the adjacent information processing apparatuses (100, 200, 300), information indicating the life-and-death states of the information processing apparatuses (100, 200, 300) managed by the life-and-death monitoring databases (130, 230).

## Description

### BACKGROUND OF THE INVENTION

### 1. Field of the Invention

The present invention relates to an information processing system, an information processing apparatus, an information processing method and a program, and, in particular, to an information processing system, an information processing apparatus, an information processing method and a program for monitoring life-and-death states of information processing apparatuses connected by means of a communication network.

### 2. Description of the Related Art

In a highly reliable network system, a monitoring packet (ping or such) is transmitted to each apparatus from a monitoring apparatus for the purpose that life-and-death monitoring is carried out on each apparatus included in the system. Then, by monitoring a responding state therefrom, a life-and-death determination is carried out. That is, it is determined whether or not the monitoring target apparatus operates properly.

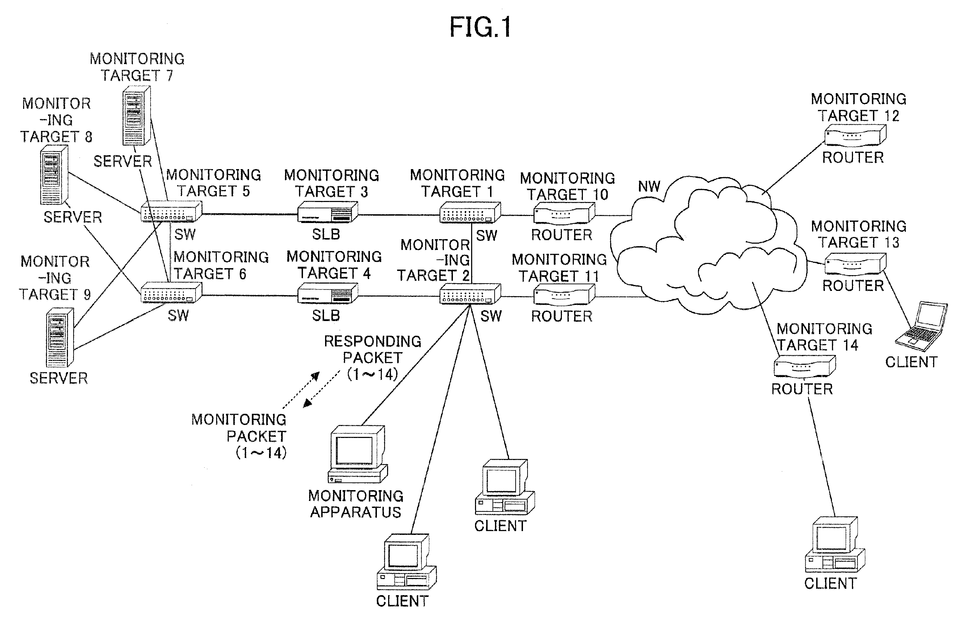

FIG. 1 illustrates a life-and-death monitoring system in the related art.

In FIG. 1, for life-and-death states of respective monitoring target apparatuses (monitoring targets 1 through 14), a monitoring apparatus monitors by means of network communication. Specifically, a monitoring packet is transmitted by the monitoring apparatus, each monitoring target apparatus responds thereto by transmitting a responding packet. The monitoring apparatus grasps the life-and-death states of the monitoring target apparatuses from the responding packets.

In a large scaled network system, there are many monitoring apparatuses and motoring target apparatus. As a result, a traffic may increase due to the above-mentioned monitoring packets. Further, a burst may occur depending on timings when the monitoring packets or responding packets reach. As a result, an erroneous determination may be made in a situation that, even when the monitoring target apparatus operates properly, a packet or a frame therefrom cannot be obtained (genetically referred to as a 'packet lost' or a 'frame lost', hereinafter) from a factor such as buffer overflow occurring when the packets are relayed, some trouble occurring in the monitoring apparatus itself, or such.

In order to avoid such an erroneous determination, a criterion for determining a trouble may be moderated. That is, a monitoring period is elongated so as to determine that a trouble has occurred only when a packet lost occurs many times successively. However, depending on a monitoring target area, there may be a case where such a moderation of the determination criterion is not allowed. Thus, actual setting of the criterion for a trouble determination may be difficult.

Further, when the size of the monitoring target network system increases, there are a plurality of relay apparatuses between the monitoring apparatus and the monitoring target apparatus. As a result, a variation in a time required for transmitting and returning of the life-and-death monitoring packet may increase. As a result, it may be difficult to adjust the criterion for a trouble determination, i.e., to determine how long time a response should be waited for to determine whether or not a trouble has actually occurred, for example.

Japanese Laid-Open Patent Application No. 2002-215476 discloses an art for reducing a load on a network by describing monitoring path information in a life-and-death monitoring packet, and transferring the same among a plurality of to-be-monitored computers in sequence.

Japanese Laid-Open Patent Application 1-195731 discloses an art for avoiding an increase in a load borne by a specific information processing apparatus by relaying a cyclic packet in sequence among information processing apparatuses.

However, in the art of Japanese Laid-Open Patent Application No. 2002-215476, the packet length of the life-and-death monitoring packet increases since the monitoring path information is included additionally, and thereby, a traffic may increase due to the life-and-death monitoring packets.

In the art of Japanese Laid-Open Patent Application 1-195731, a time is required for transferring the cyclic packet in sequence among the information processing apparatuses, and thus, a time may be required until monitoring results are finally obtained.

### SUMMARY OF THE INVENTION

The present invention has been devised in consideration of the above-mentioned problem, and, an object of the present invention is to provide an information processing system in which it is possible to effectively control an increase in traffic in a communication network caused by transmission of life-and-death monitoring information, and also, a state of a monitoring target apparatus can be timely recognized, as well as to provide an information processing apparatus included in the system, an information processing method for achieving the system, and a program for achieving the functions of the system by a computer.

According to the present invention, a plurality of monitoring target information processing apparatuses are grouped into a plurality of groups, life-and-death monitoring databases are provided for managing life-and-death states of the information processing apparatuses for each particular group, and information indicating the life-and-death states of the information processing apparatuses are transmitted in sequence among the groups by means of information transmission between the adjacent information processing apparatuses.

In this configuration, the information indicating the life-and-death states of the information processing apparatuses managed by the life-and-death monitoring database of each information processing apparatus is transmitted only between the adjacent information processing apparatuses. Accordingly, it is possible to effectively control an increase in a traffic caused by transmission of the life-and-death monitoring information.

The transmission of the information indicating the life-and-death states managed by the life-and-death database which each information processing apparatus has, between the adjacent information processing apparatuses, may include transmission between the first information processing apparatus and a plurality of the second information processing apparatuses as long as these second information processing apparatuses are adjacent to the first information processing apparatus. That is, information transmission is made in a type of so-called 'star network' manner. As a result, in comparison to a case where transfer is made in sequence only along a single path (not including any branch path), it is possible to effectively reduce a time required for life-and-death monitoring. This advantage becomes more remarkable as the size of the monitoring target network increases.

Further, in the present invention, transmission of the information indicating the life-and-death states of the information processing apparatuses is made only between the adjacent information processing apparatuses directly, as mentioned above. As a result, a variation in a time required for transferring the information is small. As a result, it is possible to effectively reduce a possibility of erroneous determination caused by a variation in a responding time.

Thus, according to the present invention, it is possible to control an increase in network traffic, to reduce a time required for finally obtaining the life-and-death state, and to reduce erroneous determination. As a result, it is possible to provide a life-and-death monitoring scheme having a minimum influence to the system and having in increased reliability.

### BRIEF DESCRIPTION OF THE DRAWINGS

Other objects and further features of the present invention will become more apparent from the following detailed description when read in conjunction with the accompanying drawings:
FIG. 1 shows a diagram for illustrating a problem in the related art;
FIG. 2 shows a block diagram for describing a configuration of an information processing system in one embodiment of the present invention;
FIG. 3 shows a processing flow chart for describing a flow of an information processing method in one embodiment of the present invention;
FIGS. 4 through 11 show diagrams for describing details of processing in the information processing method shown in FIG. 3;
FIGS. 12 through 17 show block diagrams for describing advantages of the information processing system in the embodiment of the present invention; and
FIG. 18 shows a block diagram for describing a computer applicable as each information processing apparatus included in the information processing system in the embodiment of the present invention.

### DETAILED DESCRIPTION OF THE PREFERRED EMBODIMENT

With reference to figures, an embodiment of the present invention will now be described.

The embodiment of the present invention has the following features:

According to the embodiment of the present invention, instead of a monitoring apparatus separately monitoring life-and-death motoring target apparatuses one by one as described above with reference to FIG. 1, the following manner is adopted]: That is, first, a monitoring target network system, i.e., a plurality of apparatuses mutually connected by means of a communication network are divided into a plurality of segments. Then, as to information indicating life-and-death states of the monitoring target apparatuses belonging to each segment and information which a subordinate relay apparatus has, a relay apparatus (which also acts as a monitoring target apparatus), belonging to the segment grasps the information in a lump. Then, the thus-grasped information indicating the life-and-death states is transmitted to another adjacent superordinate relay apparatus. Thus, the information indicating the life-and-death states is transmitted in a relay manner between the adjacent relay apparatuses in sequence. As a result, finally, the information indicating the life-and-death states of all the monitoring target apparatuses is collected to the highest monitoring apparatus.

In this life-and-death monitoring method, the information indicating the life-and-death states of the monitoring target apparatuses belonging to each segment is transmitted directly to the adjacent relay apparatus. Accordingly, in comparison to the configuration of the related art described above with reference to FIG. 1 in which the responding packet is transmitted from the particular monitoring target apparatus to the monitoring apparatus separately, it is possible to effectively reduce a life-and-death monitoring information transmitting amount.

Further, by thus dividing the monitoring scope into the segments, it is possible to carry out life-and-death monitoring in various ways in a flexible manner depending on an actual traffic of each area. As a result, it is possible to minimize erroneous life-and-death determination occurring due to life-and-death monitoring frame loss caused by an excessive traffic increase. That is, it is possible to avoid such a situation that a frame loss occurs due to an excessive traffic increase, and thereby, such an erroneous determination occurs that even the properly operation monitoring target apparatus is determined as having a trouble.

Further, even when the monitoring target network has an increased size, a variation in a responding time of the life-and-death monitoring packet is minimized. As a result, it is possible to avoid such erroneous determination occurring due to occurrence of life-and-death waiting time-out.

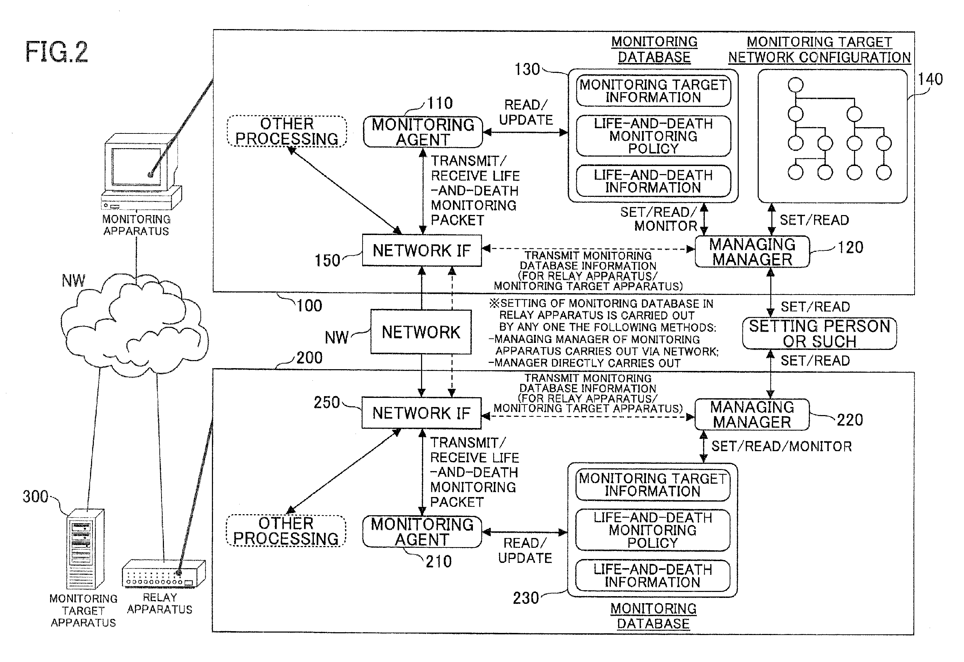

FIG. 2 shows a block diagram for describing configurations of the monitoring apparatus 100 and the relay apparatus 200 included in the life-and-death monitoring system in the embodiment of the present invention.

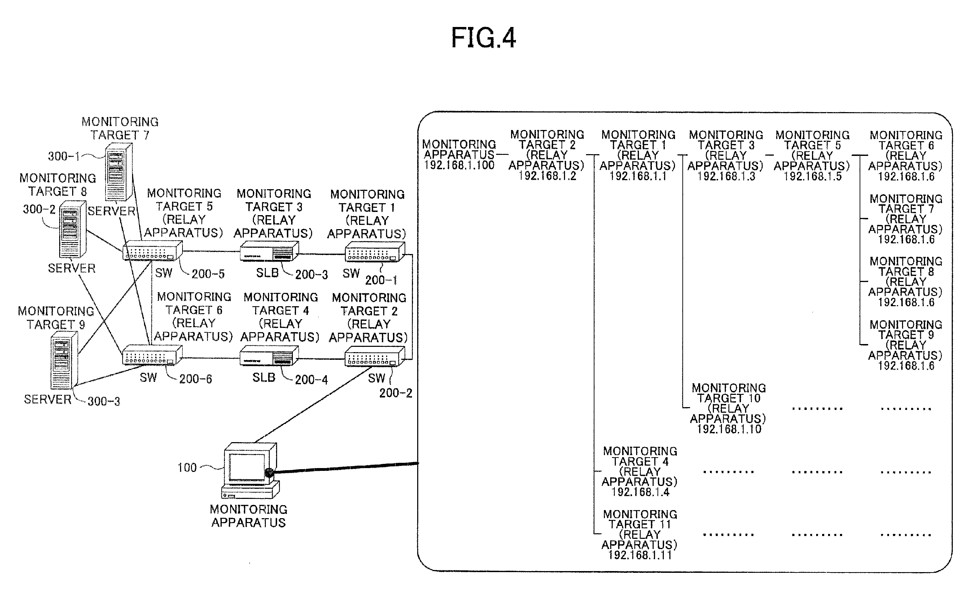

This life-and-death monitoring system includes the monitoring apparatus 100, the plurality of relay apparatuses 200 (which also act as monitoring target apparatuses) and monitoring target apparatuses 300, mutually connected by means of a communication network NW. These relay apparatuses 200 (2GG-1, 200-2, ...) and the monitoring target apparatus 300 (300-1, 300-2, ...) themselves actually act as network apparatuses, each having a separate function, such as SLB, SW, servers and so forth, as shown in an apparatus arrangement of FIG. 4, left hand, for example.

The monitoring apparatus 100 monitors life-and-death states of the respective monitoring target apparatuses (including the relay apparatuses) 200-1, 200-2, ..., 300-1, 300-2, ..., belonging to this monitoring target network system.

The monitoring apparatus 100 not only obtains information indicating life-and-death states of adjacent monitoring target apparatuses belonging to the above-mentioned segment to which the monitoring apparatus 100 itself belongs, but also obtains, via the relay apparatus 200 belonging to another segment, information of a life-and-death state of this relay apparatus itself, and information indicating life-and-death states of the monitoring target apparatuses 300 connected thereto in a subordinate manner. The monitoring target apparatuses 300 connected in a subordinate manner means the monitoring target apparatuses 300 which are adjacent to this relay apparatus 200 in a subordinate manner.

As shown in FIG. 2, the monitoring apparatus 100 includes a monitoring agent 110, a monitoring database 130, monitoring target network configuration information 140, a managing manager 120 and a network interface (IF) 150.

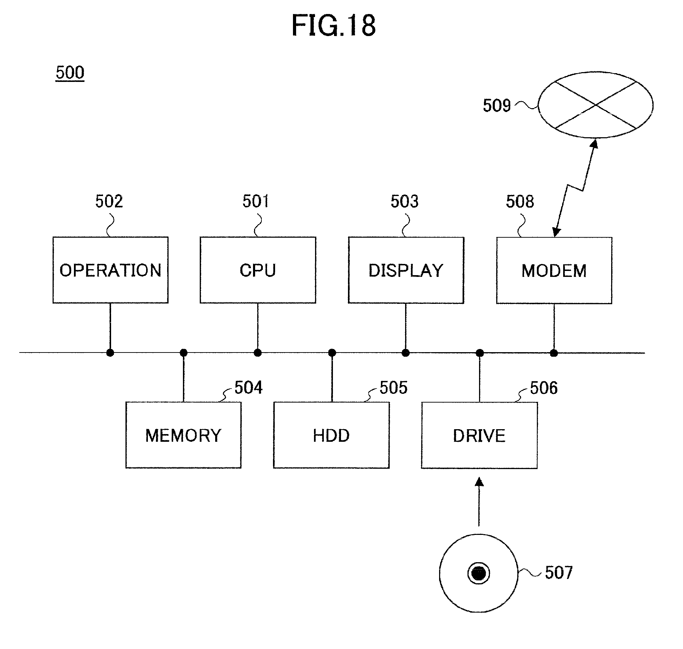

The monitoring apparatus 100 is made of, for example, a computer as shown in FIG. 18. The monitoring agent 110 and the monitoring manager 120 may be realized as a result of a CPU 501 of the computer (see FIG. 18) executing instructions of a program stored in a memory 504. Further, the monitoring database 130 and the monitoring target network configuration information 140 may be realized in a form of corresponding data files stored in a hard disk drive 505 of the computer. Further, the network interface 150 may be realized by a modem 508 of the computer.

The monitoring apparatus 100 holds the monitoring target network configuration information 140 indicating a configuration of the entirety of the network system to monitor the life-and-death states of the apparatuses included therein. The monitoring apparatus 100 also holds the monitoring database 130 (i.e., information indicating the life-and-death states of the corresponding monitoring target apparatuses and so forth) concerning the adjacent monitoring target apparatuses 300 in the segment to which the monitoring apparatus 100 itself belongs to and the other relay apparatuses 200 (also acting as the monitoring target apparatuses) belonging to the other segments.

Further, the monitoring apparatus 100 periodically transmits life-and-death response requesting frames to the adjacent motoring target apparatuses 300 within the segment to which the monitoring apparatus 100 itself belongs as well as the relay apparatuses 200 belonging to the other segments, and receives life-and-death responding frames from these monitoring target apparatuses. Thereby, the monitoring apparatus 100 determines life and death states of these monitoring target apparatuses, and holds the determination results in the monitoring database 130. This function is executed by the monitoring agent 110. Further, the contents of the monitoring target network configuration information 140 and the monitoring database 130 are managed by the managing manager 120.

Each relay apparatus 200 obtains life-and-death states of the monitoring target apparatuses subordinately adjacent thereto belonging to its own segment, and also, obtains, from the subordinately adjacent relay apparatuses 200, information indicating life-and-death states of the monitoring target apparatuses which information these relay apparatuses have. Then, the thus-obtained information indicating the life-and-death states of the monitoring target apparatuses are managed in a lump.

Each relay apparatus 200 has a monitoring agent 210, a monitoring database 230, a managing manager 220 and a network interface 250.

Also each relay apparatus 200 is made of, for example, a computer shown in FIG. 18. The monitoring agent 210 and the monitoring manager 220 may be realized as a result of a CPU 501 of the computer (see FIG. 18) executing instructions of a program stored in a memory 504. Further, the monitoring database 230 may be realized in a form of corresponding data files stored in a hard disk drive 505 of the computer. Further, the network interface 250 may be realized by a modem 508 of the computer.

Each relay apparatus 200 holds the monitoring database 230 concerning the subordinately adjacent monitoring target apparatuses 300 belonging to the segment to which the relay apparatus 200 itself belong, as well as concerning the subordinately adjacent other relay apparatuses 200. Further, the relay apparatus 200 periodically transmits the life-and-death response requesting frames to these monitoring target apparatuses 200 and 300, determines life and death states thereof from the life-and-death responding frames obtained in response thereto, and reflects the determination results in the database 230.

Further, each relay apparatus 200 responds to the life-and-death response requesting frame transmitted from the superordinately adjacent monitoring apparatus 100 or the superordinately adjacent relay apparatus 200, by transmitting (returning) the information indicating the life-and-death states held in the monitoring database 230 of its own. This function is carried out by the monitoring agent 210.

The contents of the monitoring database 230 are managed by the managing manager 220.

Further each monitoring target apparatus 300 responds to the life-and-death responding request, from the relay apparatus 200 or the monitoring apparatus 100, by notifying of (returning) its own life-and-death state in a form of a life-and-death responding frame.

Further, setting of information in the monitoring database 230 of each relay apparatus 200 is carried out by the managing manager 120 of the monitoring apparatus 100 via the network NW, or, carried out directly by a manager (person) of this relay apparatus himself or herself.

Next, a specific operation procedure in the life-and-deatlt monitoring system in the embodiment of the present invention will be described in detail.

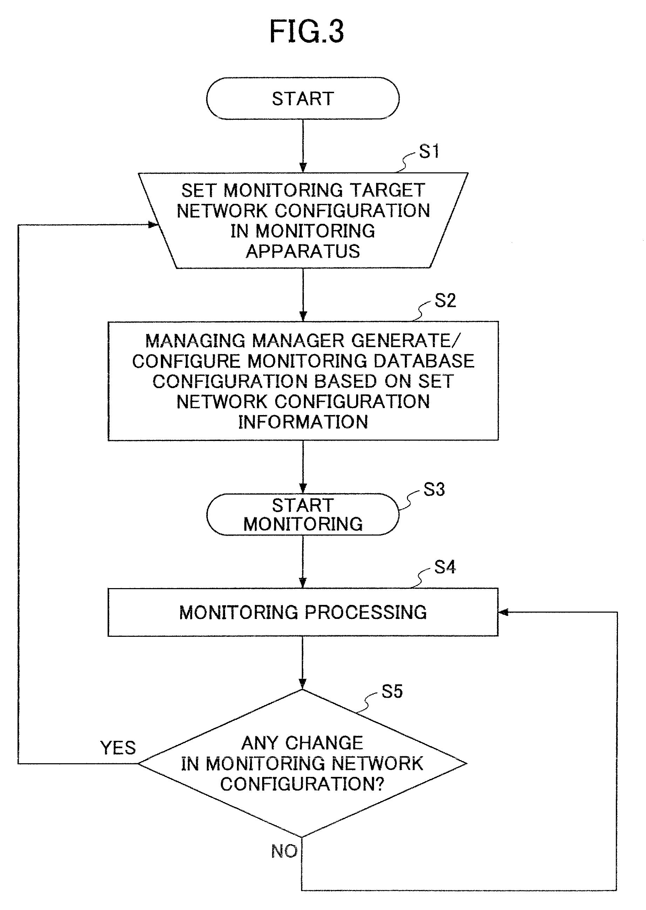

FIG. 3 shows a processing flow chart showing a flow of the entirety of the system operation.

In FIG. 3, in Step S1, the manager (person) of the monitoring apparatus 100 sets the monitoring target network configuration information 140.

In Step S2, based on the monitoring target network configuration information 140, the managing manager 120 sets the monitoring database 130. After that, the life-and-death monitoring operation is started (Step S3).

In Step S4, the manager (person) determines whether or not a change has occurred in the configuration of the monitoring target network system.

The above-mentioned steps S1, S2 and S4 will now be described in detail.

First, Step S1 is described.

The whole configuration of the life-and-death monitoring target network system is, for example, shown enclosed by a frame on the right hand of FIG. 4.

That is, from its own (the monitoring apparatus), the subordinately adjacent monitoring target relay apparatus (1); the further subordinately adjacent monitoring target relay apparatuses (1), (4), (11); the further relay apparatuses (3), (10) subordinately adjacent to the relay apparatus (1); the further relay apparatuses (5) subordinately adjacent to the relay apparatus (3); the further relay apparatuses (6) through (9) subordinately adjacent to the relay apparatus (5),and so forth, are set. Thus, the actual connection relationship among the monitoring target apparatuses with respect to the own apparatus is set.

In Step S2, for each of the monitoring apparatus 100 and the relay apparatuses 200, the monitoring database 130 or 230, holding the apparatus information of the monitoring target apparatuses, to be monitored thereby, a life-and-death policy defining an actual method of life-and-death monitoring, and the life-and-death state information, is built.

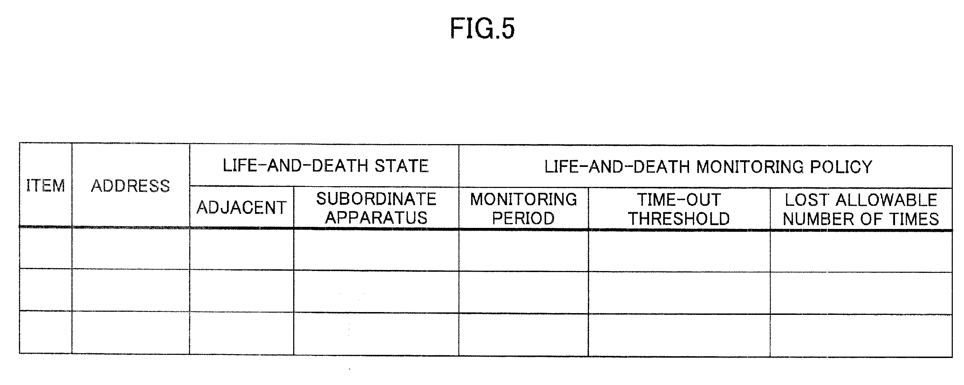

The monitoring database 130 or 230 includes fields such as those shown in FIG. 5. Each field will now be described.

In FIG. 5, 'item' means an identifier of the monitoring target apparatus (or a path therefor) with respect to the apparatus 100 or 200 having the monitoring database 130 or 230. Further, the value stored there corresponds to an order of bits representing respective life-and-death states of the subordinate apparatuses (details will be described later), which is notified of to the superordinate apparatus with the life-and-death responding frame.

In the field 'address', an address of the corresponding monitoring target apparatus is stored (FIG. 4, enclosed by a frame of right hand, the address of each monitoring target apparatus is shown).

In the field 'life-and-death state', for each bit, the life-and-death state of the corresponding monitoring target apparatus is stored.

In the field 'adjacent', the life-and-death state of the subordinately adjacent apparatus is stored. Specifically, "1" represents a 'dead' state, and "0" represents a 'live' state. When a response to the life-and-death response requesting frame has been properly obtained, "0" is stored (in principle, determined according to a criterion determined according to the 'life-and-death policy' (described later)).

In the field 'subordinate apparatus', the life-and-death states of the further subordinate apparatuses (i.e., the monitoring target apparatuses monitored by the above-mentioned adjacent monitoring target apparatus itself), received from the subordinately adjacent monitoring target apparatus. There, the life-and-death states of the subordinate apparatuses, notified of with the life-and-death responding frame from the adjacent monitoring target apparatus, are stored (described later).

In the field of 'life-and-death policy', a 'monitoring period', the life-and-death determination criterion, i.e.., a 'time-out threshold' for the life-and-death responding frame waiting time, and a 'lost allowable number of time' for a frame loss of the life-and-death frame, as the specific method for life-and-death monitoring, are stored. Other than these, various items may be set as the necessity arises.

The 'monitoring period' of the 'life-and-death policy' indicates a period for successively transmitting the life-and-death response requesting frame to the monitoring target apparatus 200 or 300.

The "time-out threshold' indicates a threshold for a required time from a time at which the corresponding life-and-death response requesting frame has been transmitted, until the life-and-death responding frame is received as a response to the thus-transmitted life-and-death response requesting frame. When the threshold is exceeded, it is determined that a frame loss has occurred.

The 'lost allowable number of times' indicates an allowable value of the number of times of occurrences of the above-mentioned frame losses. When a frame loss has occurred exceeding the number of times corresponding to the lost allowable number of times, it is determined that a trouble has actually occurred in the corresponding monitoring target apparatus 200 or 300, and "1" is stored in the corresponding bit in the life-and-death state field accordingly.

As mentioned above, the monitoring database 230 of each relay apparatus 200 may be built from the monitoring apparatus 100 via the network, or, may be built directly by the manager (person) of the relay apparatus 200 manually, for each apparatus.

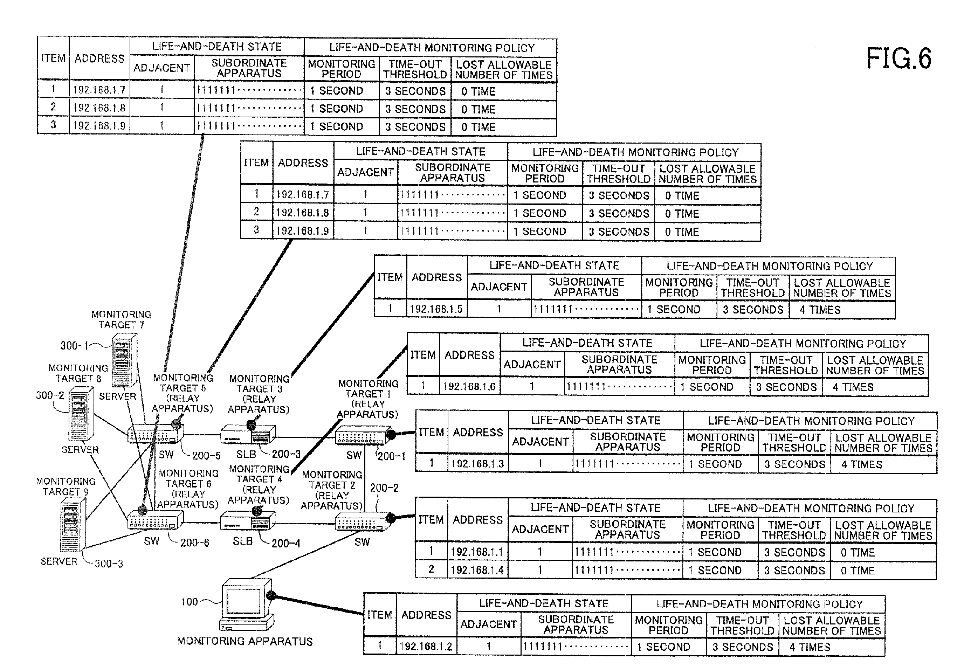

FIG. 6 shows an example of actual stored contents in each field included in the monitoring database 130 or 230 which each of the monitoring apparatus 100 and the relay apparatuses 200-1 through 200-6 (which may be generically referred to as 'relay apparatus 200') has.

Step S4 of FIG. 3 will now be described.

In the monitoring apparatus 100 or the relay apparatus 200, thanks to the function of the monitoring agent 110 or 210, life-and-death monitoring for the subordinately adjacent monitoring target apparatuses (including the relay apparatuses 200) is carried out periodically, and updates the 'life-and-death state' fields and the 'adjacent' (adjacent apparatus) fields (see FIGS. 5 and 6) of its own monitoring database 130 or 230 based on the monitoring results.

This life-and-death monitoring is carried out actually as a result of the life-and-death response requesting frame being transmitted to the monitoring target apparatus according to the above-mentioned life-and-death policy (the monitoring period and so forth, see FIGS. 5 and 6) of the monitoring database 130 or 230 of the monitoring agent 110 or 210, and a response (i.e., the life-and-death responding frame) thereto being waited for.

At this time, life-and-death determination is made, as described above, according to the life-and-death monitoring policy (the time-out threshold and the lost allowable number of times) set in the monitoring database 130 or 230.

Further, from the information of the life-and-death states of the further subordinate monitoring target apparatuses with respect to the relay apparatus 200 from which the life-and-death responding frame has been thus received, included in the life-and-death responding frame, the life-and-death state fields, the subordinate apparatus fields of the monitoring database 130 or 230 are updated.

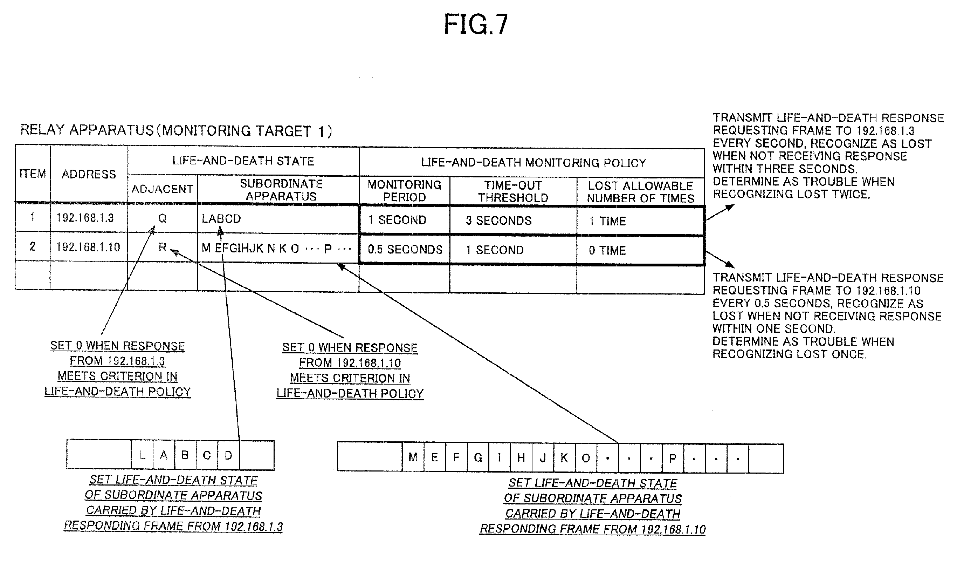

FIG. 7 shows an example of the stored state in the monitoring database 230 held by the relay apparatus 200-1 (i.e., the monitoring target 1, see FIG. 4, enclosed by the frame).

FIG. 7, bottom, shows an example of the stored states of the life-and-death responding frames obtained from the monitoring target 3 (i.e., the relay apparatus 200-3 (192.168.1.3)) and the monitoring target 10 (192.168.1.10) (not shown in the arrangement shown in FIG. 4, left hand), respectively.

As shown in FIG. 7, in the monitoring database 230 of the relay apparatus 200-1 (FIG. 4, top), the 'item' of the monitoring target 3 (i.e., the relay apparatus 200-3) which is the subordinately adjacent monitoring target apparatus is set as "1", the address "192. 168. 1. 3" is stored in the 'address' field, and the life-and-death state (i.e., "Q", in FIG. 7) of the apparatus (i.e., the monitoring target apparatus 3 (200-3)) is stored in the 'adjacent' field of the 'life-and-death state' field, and, in the 'subordinate apparatus' field of the 'life-and-death state' field, the life-and-death states (in FIG. 7, "L", "A", "B", "C" and "D") of the monitoring target apparatuses further subordinately adjacent to the apparatus (i.e., the monitoring target apparatus 3 (200-3)), are stored.

As the life-and-death state "Q" of the subordinately adjacent monitoring target 3 (200-3), "0" (representing "live") is stored when the life-and-death responding frame has been properly obtained from the corresponding monitoring target apparatus in a condition such that the criterion defined in the corresponding life-and-death monitoring policy is met.

This criterion is according to the life-and-death monitoring policy set for the corresponding relay apparatus 200-3, shown in the life-and-death policy field of the 'item', "1" of the monitoring database 230 of the relay apparatus 200-1 shown in FIG. 7, top (i.e., "one second", "3 seconds" and "1 time"). That is, according to the life-and-death monitoring policy, the life-and-death response requesting frame is transmitted every "one second" ('monitoring period') to the corresponding apparatus (the monitoring target 3 (200-3)), and a frame loss is recognized when no response has been returned within "3 seconds" ('time-out threshold'). Further, a trouble determination is made when the loss recognition occurs two times (exceeding the 'lost allowable number of times': "1 time"). When the trouble determination is made, "1" (representing "dead") is stored in the corresponding 'life-and-death state' field, 'adjacent' field, as the above-mentioned "Q".

Further, as each of the life-and-death states "L", "A", "B", "C" and "D" of the monitoring target apparatuses further subordinately adjacent to the monitoring target 3, "0" or "1" is stored according to the contents of the life-and-death responding frame (i.e., actual values represented by L, A, B, C and D, shown in FIG. 7, bottom left) obtained from the monitoring target 3 (200-3) directly subordinately adjacent to the relay apparatus 200-1.

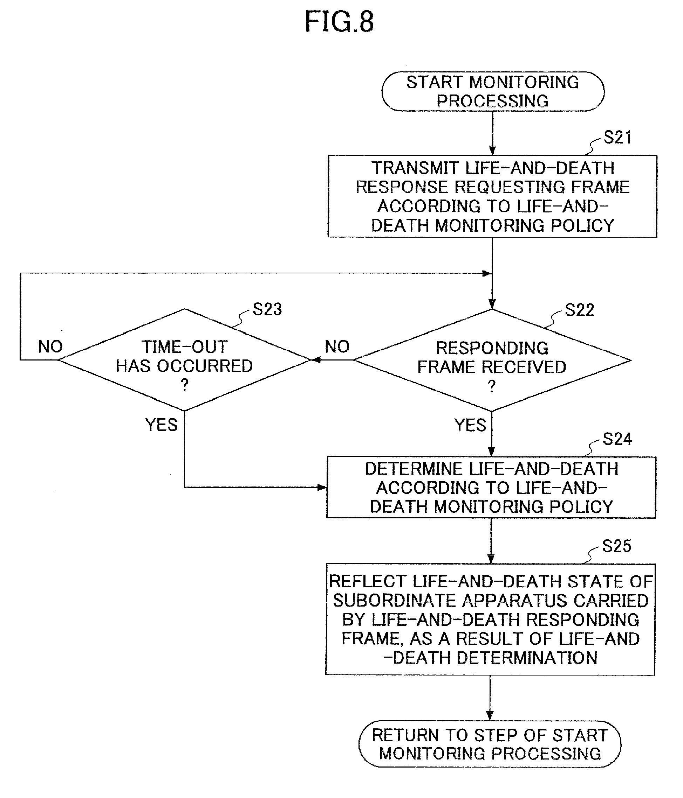

FIG. 8 shows a flow of life-and-death monitoring operation in Step S4 of FIG. 3.

In Step S21, the monitoring apparatus 100 or the relay apparatus 200 transmits the life-and-death response requesting frame to the monitoring target apparatus according to the life-and-death monitoring policy held in the above-mentioned monitoring database 130 or 230.

In Step S22, it is determined whether or not the life-and-death responding frame has been properly received, and, when it has not been properly received, it is determined whether or not time-out has occurred, according to the life-and-death monitoring policy, in Step S23. Before time-out, Step S22 is carried out again.

After time-out (Yes in Step S23), or when the life-and-death responding frame has been properly received (Yes in Step S22), a life-and-death state of the monitoring target apparatus is determined according to the life-and-death monitoring policy held by the monitoring database 130 or 230 (Step S24).

The determination result of Step S24, and the information of the life-and-death states of the further subordinate monitoring the apparatuses, obtained from the thus-received life-and-death responding frame, are reflected as the values of the 'life-and-death state' field, the 'adjacent' field and 'subordinate apparatus' field, held by the monitoring database 130 or 230 (Step S25).

The monitoring agent 210 of the relay apparatus 200 responds to the life-and-death response requesting frame from the monitoring agent 110 or 210 of the other superordinate apparatus, by storing the information indicating the life-and-death states stored in the monitoring database 230 of its own, in the life-and-death responding frame, and transmitting (returning) the same.

At this time, to the values of a bitmap (i.e., "L", "A" "B", "C" and "D" in the above-described example of FIG. 7) stored in the life-and-death state' field, 'subordinate apparatus' field of the own monitoring database 230, the value (i.e., "Q" in the same example) stored in the 'life-and-death state' field, 'adjacent' field is added, and then, these values are transmitted, in the order of the value stored in the corresponding 'item' fields.

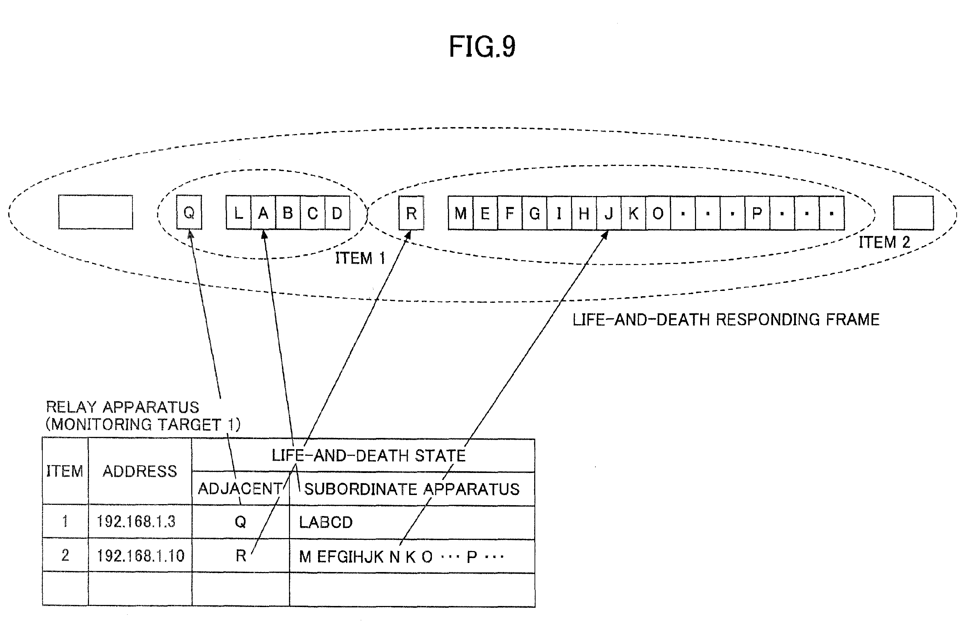

That is, in the example of FIG. 7, subsequent to "QLABCD" of the 'item' "1", "RMEFGIHJKNKO..." of the 'item' "2" are transmitted. FIG. 9 shows the information stored state in the life-and-death responding frame in this case.

It is noted that the highest monitoring apparatus 100 previously grasps this arrangement order in the monitoring target network configuration information 140, and thus, it can determine which monitoring target apparatus corresponds to the life-and-death state represented by each bit position in the received life-and-death responding frame.

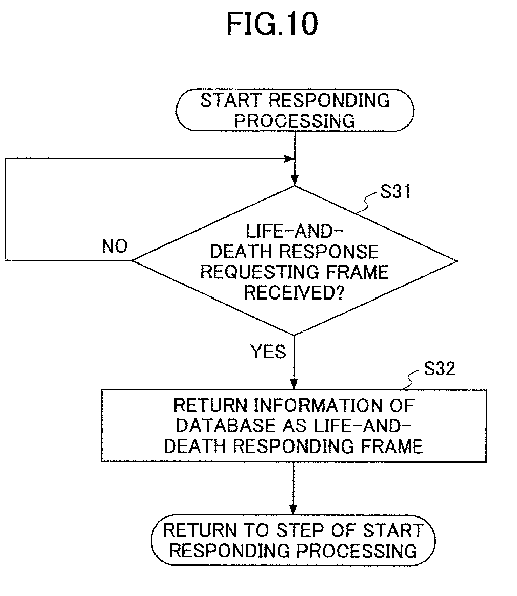

FIG. 10 shows an operation flow chart for when each relay apparatus 200 receives the life-and-death response requesting frame from the superordinate monitoring apparatus 100 or relay apparatus 200, and responds thereto.

In Step S31, it is determined whether or not the life-and-death response requesting frame has been properly received, and, when it has been properly received, the information indicating the life-and-death states held by its own monitoring database 230 is stored in the life-and-death responding frame, and is responded (Step S32).

The monitoring apparatus 100 monitors the life-and-death states of all the monitoring target apparatuses (including the relay apparatuses) by managing its own monitoring database 130.

That is, when a trouble has occurred in any one of the monitoring target apparatuses, its own monitoring database 130 is compared with the whole configuration 140 of the network system set in Step S1 of FIG. 3, and thus, it is possible to identify the corresponding monitoring target apparatus.

Specifically, this identification is carried out from determination as to which monitoring target apparatus corresponds to the bit position in which "1" is stored in the life-and-death state field of the monitoring database 130.

As mentioned above, the information stored in the life-and-death state field of the monitoring database 230 of each relay apparatus 200 is responded to the superordinate relay apparatus 200 or the monitoring apparatus 100 in the predetermined order of the values stored in their 'item' fields. Accordingly, it is possible to easily identify the monitoring target apparatus corresponding to the trouble bit, i.e., the bit having the value "1".

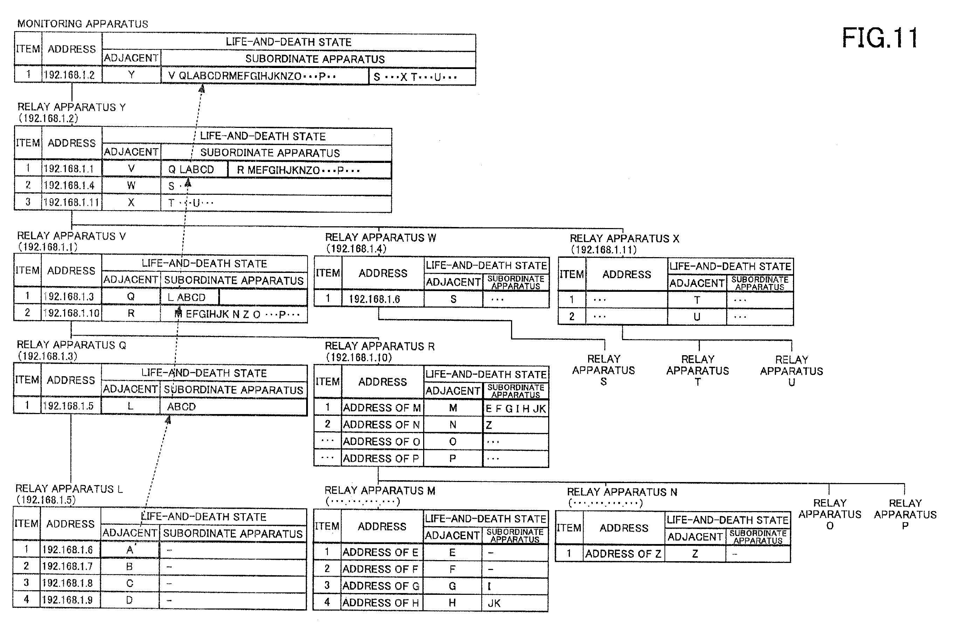

FIG. 11 shows a correspondence relationship of the bit positions when each relay apparatus transfers the information indicating the life-and-death states from its own monitoring database 230 to the superordinate relay apparatus 200 or monitoring apparatus 100, in sequence.

For example, in FIG. 11, bottom left, from the relay apparatus L, the life-and-death states A, B, C and D of the monitoring target apparatuses subordinate adjacent thereto, held by its own monitoring database 230, is transferred to the superordinate adjacent relay apparatus Q, in the order of its 'item' fields, i.e., the stated order of A, B, C and D. As a result, in the relay apparatus Q, the life-and-death state L of the transfer-source relay apparatus L, as well as the thus-transferred life-and-death states A, B, C and D of the further subordinate monitoring target apparatuses, are held in its own monitoring database 230.

Similarly, from the relay apparatus Q, the life-and-death state L of the monitoring target apparatus L subordinately adjacent thereto, as well as the life-and-death states A, B, C and D of the further subordinate monitoring target apparatuses, are transferred to the further superordinately adjacent relay apparatus V. As a result, in the relay apparatus V, the life-and-death state Q of the transfer-source relay apparatus Q, as well as the thus-transferred life-and-death state L of the further subordinate monitoring target apparatus L, and further, the life-and-death states A, B, C and D of the .further subordinate monitoring target apparatuses, are held in its own monitoring database 230.

Similarly, from this relay apparatus V, the life-and-death states Q of the above-mentioned monitoring target apparatus Q subordinately adjacent thereto, the life-and-death states L of the further subordinately adjacent monitoring target apparatus L, as well as the life-and-death states A, B, C and D of the further subordinately adjacent monitoring target apparatuses, held in its monitoring database 230, are transferred to the superordinately adjacent relay apparatus Y.

It is noted that, the relay apparatus V obtains, not only the above-mentioned information (i.e., 'item', "1") indicating the life-and-death states, but also the information (i.e., 'item', "2") indicating the life-and-death states of the subordinately adjacent other monitoring target apparatus R. Accordingly, also from the subordinately adjacent relay apparatus R, the information indicating the life-and-death states is transferred, the same as the above-mentioned case of the subordinate relay apparatus Q, and the thus-obtained information is stored in the monitoring database 230 (R, M, E, F, G, I, H, J, K) of the relay apparatus V.

Accordingly, the relay apparatus V transfers, to the superordinately adjacent relay apparatus Y, the information indicating the life-and-death states concerning the relay apparatus Q stored in the monitoring database 230 (i.e., the stored information in the 'life-and-death state' field of the 'item' "1"), and then, similarly, the information indicating the life-and-death states concerning the relay apparatus R also stored in the monitoring database 230 (i.e., the stored information in the 'life-and-death state' field of the 'item' "2").

In the relay apparatus Y, which has thus received the life-and-death responding frame, the following information is stored as the information indicating the life-and-death states of the 'subordinate apparatuses' in the 'item' "1" of its monitoring database 230, as the information indicating the life-and-death states concerning the transfer-source relay apparatus V: that is, the information V indicating the life-and-death state of the relay apparatus V itself; the information Q indicating the life-and-death state of the further subordinate relay apparatus Q; the information L indicating the life-and-death state of the further subordinate relay apparatus L; as well as the information A, B, C and D indicating the life-and-death states of the further subordinate monitoring target relay apparatuses.

Further, also as the information indicating the life-and-death states of the 'subordinate apparatuses' in the 'item' "1" of its monitoring database 230, as the information indicating the life-and-death states concerning the relay apparatus R, the same as the above, the information RMEFGIHJKNZO..., indicating the life-and-death states of itself as well as the respective relay apparatuses M, N, O and P connected subordinately thereto, as well as the further subordinate monitoring target apparatuses (which may include the relay apparatuses), are stored in the relay apparatus Y.

Thus, each time, each lower monitoring target apparatus transmits the information indicating the life-and-death states, which this apparatus itself has, to its directly superordinately adjacent relay apparatus 200 or monitoring apparatus 100 in sequence. Then, finally, to the highest monitoring apparatus 100 (the top of FIG. 11), from the directly subordinately adjacent relay apparatus Y, the information indicating the life-and-death states stored in its monitoring database 230 is transferred in the order to the values of the corresponding 'item' fields. The monitoring apparatus 100 thus stores, in its monitoring database 130, together with the information indicating the life-and-death state of the transfer-source relay apparatus Y itself (stored in its 'adjacent' field), the information indicating the life-and-death states of the further subordinate monitoring target apparatuses (including the relay apparatuses).

Thus, as shown in FIG. 11, in the embodiment of the present invention, the following features are included:
1) the information indicating the life-and-death states, transferred from the subordinate to the superordinate in sequence, is stored in the monitoring database 230 or 130 of the transfer-destination relay apparatus or monitoring apparatus 200 or 100, the 'life-and-death state' field ('adjacent' and 'subordinate apparatus' filed), in the predetermined order of the corresponding 'item' fields.
2) The transfer of the information indicating the life-and-death states is made in the order of the values stored in their 'item' fields.
3) Further, in the transfer destination, the information indicating the life-and-death states thus transferred in the order of the values stored in the corresponding 'item' fields, is stored in the same order in the corresponding 'life-and-death state' fields of the monitoring database 230.

As a result, in the respective 'items' of the 'life-and-death state' fields of the monitoring database 230 or 130 of each relay apparatus or monitoring apparatus 200 or 100, the information indicating the life-and-death states, obtained from each predetermined subordinately adjacent single monitoring target apparatus, is stored in the predetermined order.

Thus, in the respective 'items' of the 'life-and-death state' fields of the monitoring database 130 of the monitoring apparatus 100, the information indicating the life-and-death states, obtained from each predetermined subordinately adjacent monitoring target apparatus, is stored in the predetermined order.

Accordingly, from the information indicating the life-and-death states stored in the monitoring database 230 or 130, held by each of the respective relay apparatuses 200 and the monitoring apparatus 100, it is possible to positively grasp the life-and-death states of the subordinate respective particular monitoring target apparatuses (which may include the relay apparatuses).

Thus, according to the embodiment of the present invention, it is possible to effectively control an increase in traffic caused by the life-and-death monitoring frames (i.e., the above-mentioned life-and-death response requesting frames and life-and-death responding frames), to reduce a possibility of burst occurrences, and thus, it is possible to reduce the packet loss rate of the corresponding life-and-death monitoring packets.

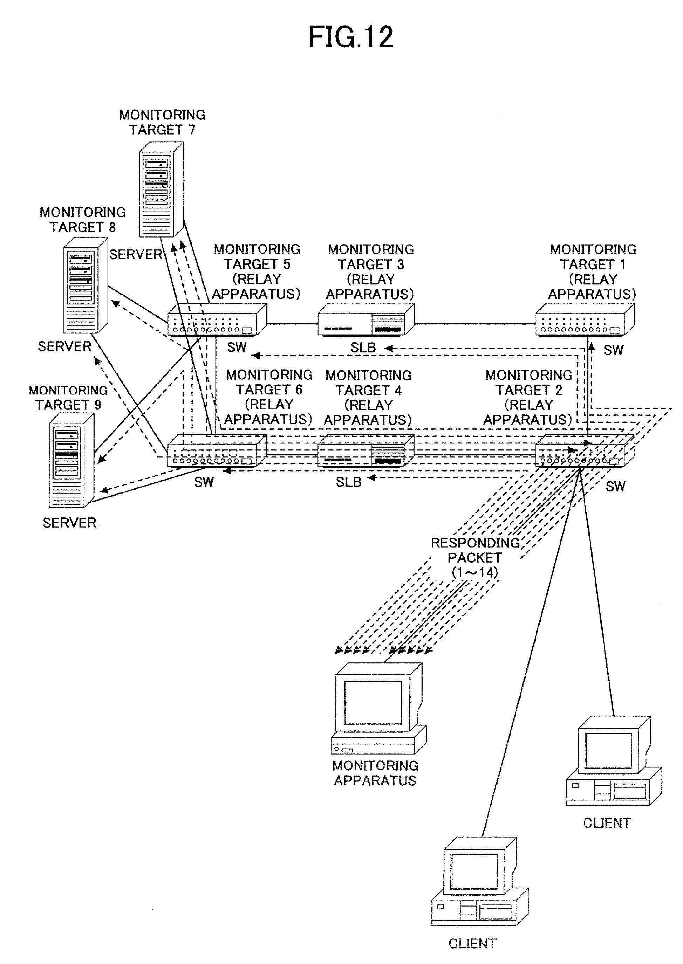

That is, in the above-mentioned related art shown in FIG. 1, as shown in FIG. 12, the monitoring apparatus transmits the life-and-death response responding frames to all the monitoring target apparatuses, and receives the life-and-death responding frames therefrom. Therefore, the many life-and-death monitoring frames flow in the network, a packet loss may easily occur, and thus, an erroneous recognition of the apparatus states (erroneous determination of a packet loss as an actual trouble of the apparatus itself) may easily occur.

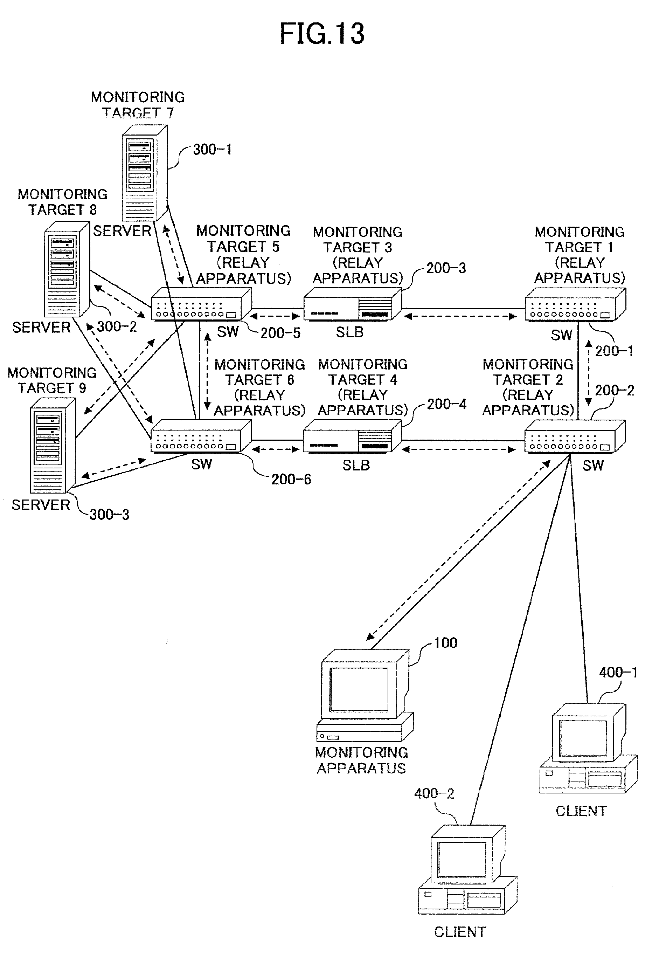

In contrast thereto, according to the embodiment of the present invention, as shown in FIG. 13, transmission/reception of the life-and-death response requesting frame and the life-and-death responding frame is carried out only between the adjacent apparatuses each time. As a result, the above-mentioned problems in the related art can be solved.

Further, in the embodiment of the present invention, it is possible to carry out monitoring flexibly according to an actual traffic condition in each area corresponding to a segment of the network system.

That is it is possible to flexibly set an actual monitoring method, a life-and-death determination criterion (i.e., the life-and-death monitoring polity) and so forth, in the life-and-death monitoring policy in the monitoring database 130/230. As a result, it is possible to effectively control life-and-death state erroneous determination caused by a life-and-death monitoring frame loss.

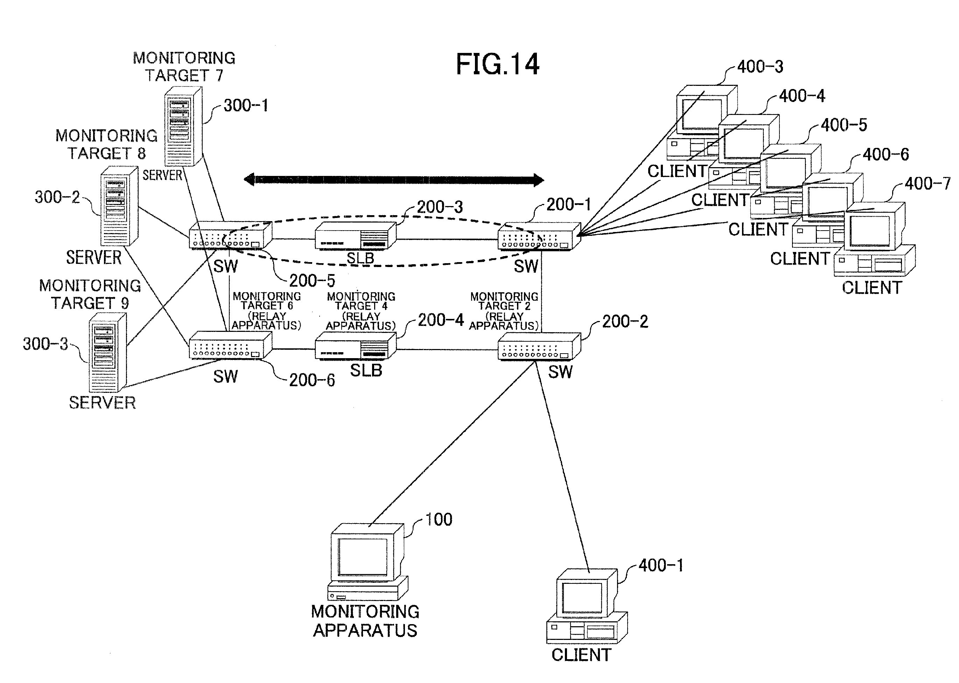

That is, for example, as shown in FIG. 14, a case will now be assumed in which many clients 400-3 through 400-7 are connected to SW 200-1, and thus, a data flow amount increases accordingly in a part enclosed by a broken line. In this case, a life-and-death monitoring frame loss may easily occur.

In such a case, according to the embodiment of the present invention, a system manager (person) may set such a monitoring condition flexibly according to the situation. That is, for the life-and-death monitoring packets which flow through the path in which a frame lost may easily occur as mentioned above, the above-mentioned 'lost allowable number of times' may be set as "4 times" for example as the life-and-death monitoring policy. By this setting of the life-and-death monitoring policy, determination that an apparatus trouble has occurred is made only when a frame loss has occurred five times successively, accordingly.

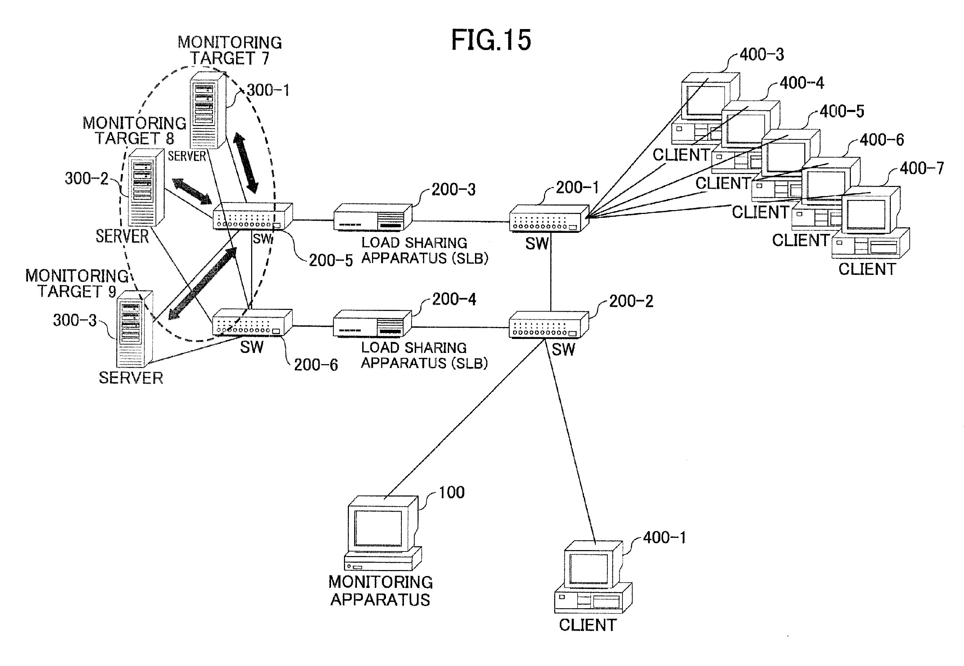

Further, even in such a situation, as shown in FIG. 15, a load sharing apparatus 200-3 may be provided so that traffic is controllable. In this case, a possibility of life-and-death monitoring frame loss occurrences is reduced. As a result, a determination that an apparatus trouble has occurred may be made immediately when the life-and-death monitoring frame is not responded only once.

In such a case, such is monitoring condition (the life-and-death monitoring policy) may be set that, for example, the above-mentioned 'lost permissible number of times' is set as "0 times". Thereby, a determination that an apparatus trouble has occurred is made immediately when non-responding has occurs only once. In this case, further, the above-mentioned 'monitoring period' in the life-and-death policy may be set shortened so that a detection of an apparatus trouble can be made rapidly.

Further, in the embodiment of the present invention, even when the monitoring target network has an increased scale, a variation in the life-and-death monitoring packet responding time is small.

That is, transmission/reception of the life-and-death monitoring packets is made only between the adjacent apparatuses. Accordingly, a variation in the time required for returning the life-and-death responding frame is small. As a result, it is easy to set the above-mentioned 'time-out threshold' in the life-and-death monitoring policy, and thus, it is possible to effectively control erroneous determination of the life-and-death state caused by an occurrence of time-out for waiting for a response of the life-and-death monitoring packet.

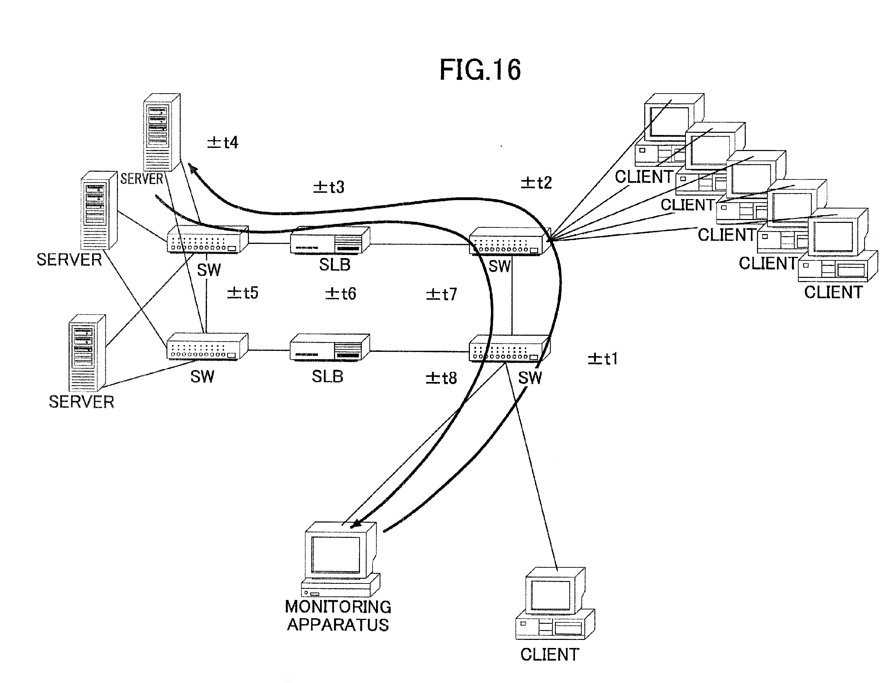

In the related art, the life-and-death monitoring packets should be transmitted and returned between the monitoring apparatus and each monitoring target apparatus. As a result, a time required for the communication may vary depending on an actual situation of the traffic state of the communication path therebetween, the state of relay apparatuses therebetween or such. As a result, the responding required time of the life-and-death monitoring packets may vary according to the situation of the network at the time. In an example of FIG. 16, the responding required time T = (t1 + t2+ t3 + t4 + t5 + t6 + t7 + t8 along the communication path indicated by arrows. As a result, it may be difficult to properly set the above-mentioned time-out threshold in trouble occurrence determination of the monitoring target apparatus. That is, if the threshold is too short, an erroneous determination may easily occur. On the other hand, if the threshold is too long, responsiveness for when an actual trouble has occurred in the monitoring target apparatus may degrade.

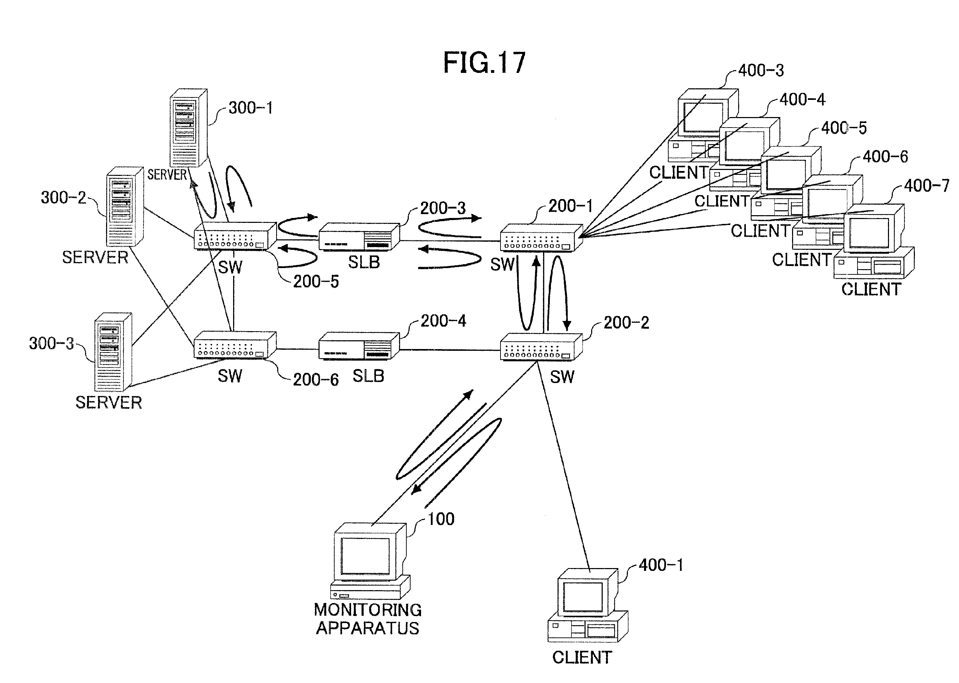

In contrast thereto, according to the embodiment of the present invention, as shown in FIG. 17, each apparatus should merely monitor its adjacent apparatus. Accordingly, a variation in the responding time is small, and thus, the apparatus life-and-death determination may be easily made.

Thus, according to the embodiment of the present invention, it is possible to flexibly set the life-and-death monitoring policy ('monitoring period', 'time-out threshold' and 'lost allowable number of times') for each monitoring target apparatus, and thus, a flexible life-and-death monitoring can be achieved.

Further, according to the embodiment of the present invention, each relay apparatus carries out life-and-death determination of the adjacent monitoring target apparatus directly. Accordingly, it is possible to achieve stable life-and-death determination. That is, an erroneous determination caused by a responding time variation or such is reduced.

Thus, according to the present invention, the information of the monitoring target apparatuses is previously set in the relay apparatuses and the monitoring apparatus, and the monitoring results are relayed therebetween. Thus, it is possible to reduce the life-and-death monitoring traffic.

Further, since the relay apparatuses and the monitoring apparatus periodically relay the results of monitoring the plurality of adjacent monitoring target apparatuses, it is possible to grasp the life-and-death states within a short time.

Accordingly, the advantages of the embodiment of the present invention become more remarkable as the scale of the monitoring target network increases.

FIG. 18 illustrates a case where the monitoring apparatus 100 and/or each relay apparatus 200 are realized by a computer, as mentioned above.

As shown in FIG. 18, the computer 500 includes a CPU 501 for carrying out various operations by executing instructions written in a given program; an input part 502 such as a keyboard, a mouse, and so forth, for a user to input operation contents or data; a display part 503 such as a CRT, a liquid crystal display device or such, for displaying, to the user, a processing progress, a processing result or such of the CPU 501; a memory 504 such as a ROM, a RAM and so forth, for storing the program to be executed by the CPU 501, or to be used as a work area of the CPU 501; a hard disk drive 505 for storing the program, data and so forth; a CD-ROM drive 506 for loading the program or data from the outside with the use of a CD-ROM 507 as an information recording medium; and a modem 508 for downloading the program or such, from an external server via a communication network 509 such as the Intent, LAN or such.

The computer 500 loads or downloads the program having the instructions for acting as the monitoring apparatus 100 or each relay apparatus 200, and carries out the corresponding functions, appropriately according to the instructions written in the program. The CD-ROM 507 may be used as an information recording media or the communication network 508 may be used for, loading or downloading the program. The program is then installed in the hard disk drive 505, is loaded on the memory 504, and is executed by the CPU 501. As a result, the computer 500 acts as the monitoring apparatus 100 or each relay apparatus 200.

The present invention is not limited to the above-described embodiments, and variations and modifications may be made without departing from the basic concept of the present invention claimed below.

The present application is based on Japanese Priority Application No. 2006-236267, filed on August 31, 2006, the entire contents of which are hereby incorporated herein by reference.

## Claims

1. A system for monitoring life-and-death states of a plurality information processing apparatuses connected by a communication network, comprising:
life-and-death monitoring databases managing the life-and-death states of the information processing apparatuses for each particular group of groups to which said plurality of information processing apparatuses to be monitored are grouped; and
a part of transferring in sequence, among the groups, by means of information transmission among the adjacent information processing apparatuses, information indicating the life-and-death states of the information processing apparatuses managed by said life-and-death monitoring databases.

2. The system as claimed in claim 1, wherein:
each information processing apparatus comprises:
a part of obtaining the life-and-death state the adjacent information processing apparatus; and
a part of incorporating the thus-obtained information indicating the life-and-death state of the adjacent information processing apparatus to the life-and-death monitoring database of its own.

3. The system as claimed in claim 1, wherein:
the information indicating the life-and-death state of each information processing apparatus in said life-and-death monitoring database is itemized for each of the adjacent information processing apparatuses from which said information is obtained, each item comprising the life-and-death state of the adjacent information processing apparatus itself and the information of the life-and-death states of other information processing apparatuses which information said adjacent information processing apparatus has; and
the itemized information indicating the life and dearth states of the respective information processing apparatuses is transferred to the other adjacent information processing apparatus in the order of the items.

4. An information processing apparatus included in a system for monitoring life-and-death states of the plurality information processing apparatuses connected by a communication network, comprising:
a life-and-death monitoring database managing the life-and-death states of the information processing apparatuses for each particular group of groups to which said plurality of information processing apparatuses to be monitored are grouped; and
a part of obtaining the information of the life-and-death states of the information processing apparatuses managed by the life-and-death monitoring database of said adjacent information processing apparatus itself; and
a part of incorporating the thus-obtained information of the life-and-death states of the information processing apparatuses to the life-and-death monitoring database of its own.

5. The information processing apparatus as claimed in claim 4, further comprising:
a part of obtaining the life-and-death state of the adjacent information processing apparatus; and
a part of incorporating the thus-obtained information indicating the life-and-death state of the adjacent information processing apparatus to the life-and-death monitoring database of its own.

6. The information processing apparatus as claimed in claim 4, wherein:
the information indicating the life-and-death state of each information processing apparatus in said life-and-death monitoring database is itemized for each of the adjacent information processing apparatuses from which said information is obtained, each item comprising the life-and-death state of the adjacent information processing apparatus itself and the information of the life-and-death states of other information processing apparatuses which information said adjacent information processing apparatus has; and
the itemized information indicating the life and dearth states of the respective information processing apparatuses is transferred to the other adjacent information processing apparatus in the order of the items.

7. A method of monitoring life-and-death states of a plurality information processing apparatuses connected by a communication network, comprising the steps of:
a) grouping the plurality of information processing apparatuses to be monitored into a plurality of groups;
b) providing life-and-death monitoring databases managing the life-and-death states of the information processing apparatuses for each particular group included in said plurality of groups; and
c) transferring in sequence, among the groups, by means of information transmission between the adjacent information processing apparatuses, information indicating the life-and-death states of the information processing apparatuses managed by said life-and-death monitoring databases.

8. The method as claimed in claim 7, further comprising the steps of:
d) each information processing apparatus obtaining the life-and-death state the adjacent information processing apparatus; and
f) said information processing apparatus incorporating the thus-obtained information indicating the life-and-death state of the adjacent information processing apparatus to the life-and-death monitoring database of its own.

9. The method as claimed in claim 7, wherein:
the information indicating the life-and-death state of each information processing apparatus in said life-and-death monitoring database is itemized for each of the adjacent information processing apparatuses from which said information is obtained, each item comprising the life-and-death state of the adjacent information processing apparatus itself and the information of the life-and-death states of other information processing apparatuses which information said adjacent information processing apparatus has; and
the itemized information indicating the life and dearth states of the respective information processing apparatuses is transferred to the other adjacent information processing apparatus in the order of the items.

10. A program for controlling a computer which controls an information processing apparatus included in a system for monitoring life-and-death states of the plurality information processing apparatuses connected by a communication network, said program comprising instructions for causing the computer to act as:
a part of obtaining the information of the life-and-death states of the information processing apparatuses managed by the life-and-death monitoring database of said adjacent information processing apparatus itself, said life-and-death monitoring database managing the life-and-death states of the information processing apparatuses for each particular group of groups to which said plurality of information processing apparatuses to be monitored are grouped; and
a part of incorporating the thus-obtained information of the life-and-death states of the information processing apparatuses to the life-and-death monitoring database of its own.

11. The program as claimed in claim 10, further comprising instructions for causing the computer to act as:
a part of obtaining the life-and-death state of the adjacent information processing apparatus; and
a part of incorporating the thus-obtained information indicating the life-and-death state of the adjacent information processing apparatus to the life-and-death monitoring database of its own.

12. The program as claimed in claim 10, wherein:
the information indicating the life-and-death state of each information processing apparatus in said life-and-death monitoring database is itemized for each of the adjacent information processing apparatuses from which said information is obtained, each item comprising the life-and-death state of the adjacent information processing apparatus itself and the information of the life-and-death states of other information processing apparatuses which information said adjacent information processing apparatus has; and
the itemized information indicating the life and dearth states of the respective information processing apparatuses is transferred to the other adjacent information processing apparatus in the order of the items.
